# FASCICULE DE BREVET EUROPEEN

(11) **EP 2 086 083 B1**
(45) Date de publication et mention de la délivrance du brevet: **19.03.2014**
(21) Numéro de dépôt: 09150913.3
(22) Date de dépôt: 20.01.2009
(51) Int. Cl.: H02G 15/007, H02G 15/113

(54) **Boîte et procédé de jonction**
Gehäuse und Verbindungsverfahren
Junction box and method

(30) Priorité: 22.01.2008 BE 200800045
(43) Date de publication de la demande: 05.08.2009
(73) Titulaire: Sadinter - Sogecomex, 1190 Forest (BE)
(72) Inventeur: Deligne, Christophe, 1200, Bruxelles (BE); Furquim, Gaëtan, 5680, Vodelee (BE); Neirnyck, Peter, 1082, Bruxelles (BE)
(74) Mandataire: Mackett, Margaret Dawn

(56) Documents cités:
- WO-A-94/09533
- WO-A-99/56370
- DE-A1- 3 344 495
- GB-A- 191 500 378

## Description

La présente invention se rapporte à une boîte de jonction présentant au moins deux orifices adjacents pour le passage de câbles à joindre, apte à être sensiblement remplie d'un matériau isolant, tel que, par exemple, une résine durcissable ou un gel, et comportant une première et une seconde demi-coquille divisées par un joint traversant lesdits orifices adjacents, ainsi qu'à un procédé d'installation d'une jonction entre au moins deux câbles dans une telle boîte de jonction.

Afin de protéger des telles jonctions de câbles, et en particulier des jonctions dérivations dans lesquelles un des deux câbles continue, il a été longtemps connu de les enclore dans des boîtes de jonction, voire jonction dérivation. Dans des environnements agressifs, comme par exemple dans des jonctions souterraines, il est toutefois nécessaire d'assurer l'étanchéité de ces boîtes. Pour cela, il a été prévu de les remplir d'un matériau isolant, comme par exemple un gel ou une résine durcissable, afin d'y encapsuler le contenu de la boîte. Une telle boîte a été divulguée par exemple dans la demande de brevet allemand 1 036 353.

Dans des telles boîtes, les contraintes mécaniques auxquelles les câbles peuvent être soumis posent toutefois des problèmes. Ainsi, des contraintes de traction ou de torsion pourraient arracher les câbles, tandis que des contraintes de flexion peuvent déplacer latéralement les câbles dans leurs orifices de passage dans la boîte, compromettant l'étanchéité de la boîte et/ou laissant échapper du matériau isolant quant il n'est pas solide. Pour cette raison il est généralement déconseillé, pour des boîtes de jonction souterraines remplies de résine durcissable, de les enterrer avant que la résine ait durcit. Malheureusement, à cause des contraintes de temps et d'argent dans des tels travaux, un tel délai d'attente n'est souvent pas respecté. Les forces agissant sur les boîtes de jonction pendant et après leur ensevelissement risquent donc de compromettre la fonction, et en particulier l'étanchéité des boîtes.

Des boîtes de jonction avec des moyens intérieurs de rétention des câbles ont été présentées dans la demande de brevet européen EP 0 801 454, dans la demande internationale de brevet WO 93/14547. Toutefois, des tels moyens intérieurs n'offrent pas une solution satisfaisante au problème du déplacement latéral des câbles soumis à des efforts en flexion. En outre, leur installation est compliquée, puisque les câbles ne sont fixés qu'une fois que ces boîtes sont refermées.

Afin de fixer les câbles à une demi-coquille d'une boîte de jonction avant la fermeture de la boîte, il a été proposé dans la demande de brevet allemand DE 33 44 495 d'utiliser des brides placées à l'intérieur de ladite demi-coquille. Bien que cette alternative rende plus simple son installation, elle ne solutionne pas le problème du déplacement latéral des câbles soumis à des contraintes de flexion. En outre, comme les brides sont ensuite noyées dans le matériau isolant, il n'est plus facile de les détacher après le remplissage de la boîte.

Dans la demande internationale de brevet WO 95/13642, des moyens de rétention extérieurs sont proposés. Toutefois, ils ne peuvent être installés qu'après la fermeture de la boîte, et n'offrent qu'une résistance limitée aux contraintes latérales.

Finalement, dans la demande internationale de brevet WO 94/16476, une boîte de jonction a été proposée avec des moyens de rétention individuels pour chaque câble devant son orifice d'entrée dans la boîte de jonction. Bien que cette boîte offre une solution au problème de la rétention tant axiale que latérale des câbles, la fixation individuelle de chaque câble implique un coût considérable en temps de travail. En outre, la boîte de jonction de WO 94/16476 n'est pas particulièrement adaptée pour des environnements agressifs, et n'est pas, par exemple, entièrement remplie de matériau isolant pendant son installation. Ainsi, la fixation des câbles dans cette boîte de jonction ne vise pas à empêcher les fuites de matériau isolant dues au déplacement latéral des câbles.

Le problème adressé par la présente invention est donc celui d'assurer une fixation efficace mais réversible des câbles à la première demi-coquille, tant avant qu'après la fermeture des deux demi-coquilles, avec un coût minimum en temps et matériel, et ceci tant pour faciliter l'installation de la boîte, comme pour empêcher des fuites de matériau isolant dues à des déplacements latéraux des câbles.

Afin de résoudre ce problème, la première demi-coquille comporte une première prolongation extérieure au niveau desdits au moins deux orifices adjacents, ladite première prolongation comportant des moyens de fixation d'une bride pour serrer simultanément au moins deux câbles adjacents contre des logements concaves dans ladite première prolongation.

Avec des tels moyens de fixation sur une prolongation extérieure de la première demi-coquille, il est possible d'assurer la fixation d'au moins deux câbles sur la première demi-coquille de manière plus rapide et aisée. En outre, comme les câbles seront fixés à l'extérieur de la boîte de jonction, devant leurs orifices de passage à l'intérieur, on obtient le nouvel avantage d'empêcher que le matériau isolant remplissant la boîte puisse s'échapper à cause de déplacements latéraux des câbles dans les orifices.

De préférence, la seconde demi-coquille peut comporter une cale détachable en prolongation d'au moins un desdits orifices adjacents, ladite cale détachable comportant un logement concave sensiblement opposé à un desdits logements concaves de ladite première prolongation. Il est ainsi possible d'assurer la fixation de câbles de différents diamètres avec la même bride selon qu'on maintienne ou détache cet adaptateur.

De préférence, la boîte de jonction peut comporter au moins un autre orifice pour le passage d'un câble à joindre, sensiblement opposé auxdits orifices adjacents et traversé aussi par ledit joint, la première demi-coquille comportant une deuxième prolongation extérieure au niveau de cet autre orifice et comportant des moyens de fixation d'une bride pour serrer ce câble contre un logement concave dans ladite deuxième prolongation. De cette manière la boîte de jonction de l'invention pourra être utilisée, par exemple, pour une jonction-dérivation. Avantageusement, la seconde demi-coquille peut comporter une cale détachable en prolongation de l'autre orifice avec un logement concave opposé au logement concave de ladite deuxième prolongation. En outre, il peut être avantageux d'équiper ladite deuxième prolongation avec des orifices pour le passage d'un collier flexible pour la fixation d'un câble. De cette manière, un utilisateur pourra choisir, suivant les circonstances, entre l'emploi d'une bride ou d'un collier flexible pour la fixation de câbles sur ladite deuxième prolongation.

De préférence, ladite première prolongation peut aussi comporter des orifices pour le passage de colliers flexibles pour la fixation de câbles, afin d'offrir une alternative à la bride pour la fixation des câbles.

De préférence, la boîte de jonction peut comporter, en outre, au moins un orifice de remplissage pour le remplissage de la boîte avec ledit matériau isolant. De cette manière, la boîte pourra être remplie du matériau isolant après la fermeture des demi-coquilles. En particulier, ledit joint traverse aussi au moins un orifice de remplissage. Ainsi, le joint divisant les deux demi-coquilles pourra être sensiblement vertical, ce qui facilitera l'arrangement souterrain de la boîte.

De préférence, la boîte de jonction peut comporter en outre une charnière entre la première et la deuxième demi-coquille, et des moyens de fermeture sensiblement opposés à ladite charnière. De cette manière, la boîte peut être facilement fermée en pivotant l'une demi-coquille contre l'autre et les attachant ensemble avec lesdits moyens de fermeture. Avantageusement, ladite charnière peut être formée par des moyens d'accrochage complémentaires dans chaque demi-coquille, par exemple des moyens d'accrochage femelles dans la première demi-coquille, et mâles dans la deuxième demi-coquille. Toutefois, la charnière pourrait être formée par des moyens alternatifs, comme par exemple par un lien flexible entre les deux demi-coquilles, en particulier un lien flexible formé intégralement avec les deux demi-coquilles. Avantageusement, lesdits moyens de fermeture peuvent comporter un couvercle clipsable, de préférence solidaire à une des demi-coquilles. Ceci fournit un moyen de fermeture simple et effectif.

De préférence, la boîte de jonction peut comporter des marquages indicatifs des côtes maximales de dégainage d'au moins un câble à joindre. De cette manière un utilisateur peut facile et rapidement déterminer les côtes de dégainage appropriées pendant l'installation de la boîte de jonction.

De préférence, au moins la première demi-coquille peut comporter des moyens de centrage d'un bloc de jonction de câbles à l'intérieur de la boîte. De cette manière, le bloc de jonction et les câbles peuvent être prépositionnés avec précision avant la fixation des câbles et la fermeture des demi-coquilles.

De préférence, au moins une des demi-coquilles, en particulier les deux, peuvent être formées en matière plastique. L'utilisation de matière plastique comporte plusieurs avantages, tels qu'un bas coût de production, une bonne résistance environnementale, des bonnes qualités mécaniques et d'isolation électrique, un poids réduit, etc. II peut être particulièrement avantageux que ladite matière plastique soit biodégradable. Si le matériau isolant est une résine durcissable, la boîte n'a plus nécessairement de fonction utile une fois qu'elle est enterrée et que la résine durcit, formant une gaine sensiblement étanche et isolante autour de la jonction des câbles. Avec une boîte en matière plastique biodégradable, celle-ci pourra alors se décomposer, limitant ainsi son l'impact environnemental.

La présente invention se rapporte aussi à un procédé d'installation d'une jonction d'au moins deux câbles dans une boîte de jonction présentant au moins deux orifices adjacents pour le passage des câbles, et comportant une première et une seconde demi-coquille divisées par un joint traversant lesdits orifices adjacents, ledit procédé comportant les étapes suivantes :
- dégainage des câbles;
- jonction des câbles moyennant un bloc de jonction ;
- fermeture des demi-coquilles autour des câbles et du bloc de jonction ; et
- remplissage de la boîte avec un matériau isolant, de préférence une résine durcissable, afin d'encapsuler les câbles et le bloc de jonction dans la boîte.

Afin de faciliter l'installation de la boîte et d'éviter des déplacements latéraux des câbles pouvant causer des fuites de matériau isolant le procédé de l'invention est caractérisé en ce que :
- la première demi-coquille comporte une première prolongation extérieure au niveau desdits au moins deux orifices adjacents;
- ledit procédé comporte en outre une étape de fixation de câbles sur au moins ladite première prolongation extérieure avant la fermeture des demi-coquilles.

De préférence, si la boîte comporte au moins un autre orifice pour le passage d'un des câbles à joindre, sensiblement opposé auxdits orifices adjacents et traversé aussi par ledit joint, et la première demi-coquille comporte une deuxième prolongation extérieure au niveau de cet autre orifice, ladite étape de fixation peut comporter aussi la fixation d'au moins un câble sur ladite deuxième prolongation extérieure. Ainsi, ce procédé peut être adopté pour l'installation d'une jonction dérivation, par exemple.

De préférence, au moins deux câbles peuvent être fixés avec une seule bride sur ladite première prolongation extérieure. De cette manière il est possible de réduire le temps d'installation de la boîte de jonction.

De préférence, un collier flexible peut être utilisé pour la fixation d'au moins un câble. De cette manière, des moyens particulièrement simples et économiques peuvent être utilisés dans la fixation des câbles.

Des détails concernant l'invention sont décrits ci-après faisant référence aux dessins.
La figure 1 montre une vue en perspective d'une boîte de jonction dérivation avec des câbles, suivant un mode de réalisation de l'invention,
les figures 2a, 2b montrent des vues en perspective d'une première demi-coquille de la boîte illustrée dans la figure 1,
la figure 3a, 3b montrent des vues en perspective d'une deuxième demi-coquille,
les figures 4a, 4b montrent des vues avant et arrière de la boîte illustrée dans la figure 1, sans les câbles,
la figure 5 montre une vue de la première demi-coquille illustrée dans les figures 2a, 2b avec un câble principal et un câble de dérivation joints par un bloc de jonction et fixés par des brides à cette première demi-coquille,
la figure 6 montre une vue de la première demi-coquille illustrée dans les figures 2a, 2b avec un câble principal et un câble de dérivation joints par un bloc de jonction et fixés par des colliers flexibles à cette première demi-coquille,
la figure 7 montre une autre vue en perspective de la boîte illustrée dans la figure 1 avec des colliers flexibles à la place des brides.

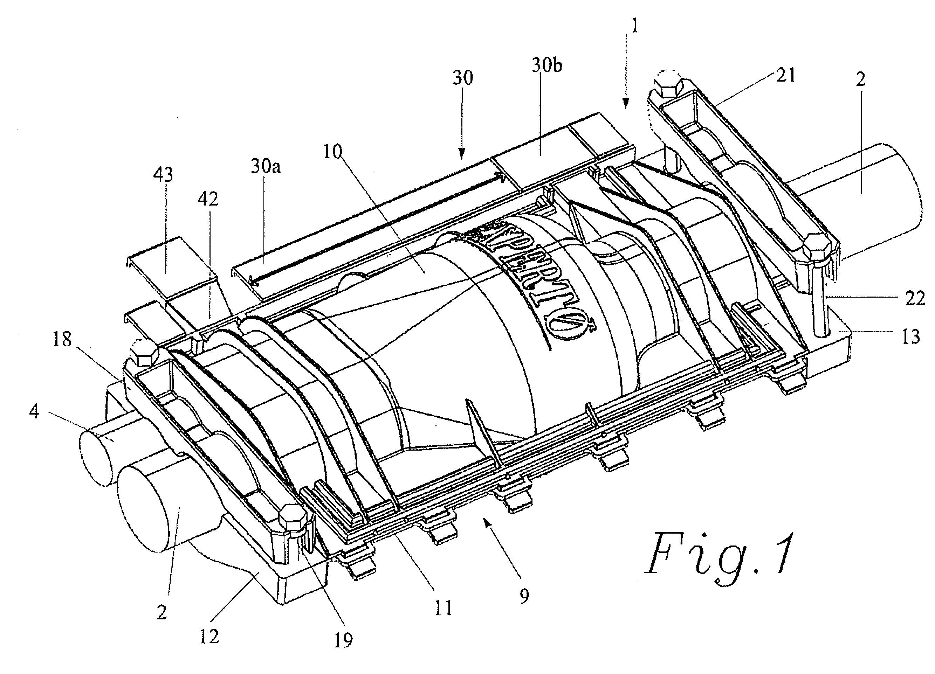

Une boîte 1 de jonction dérivation suivant un mode de réalisation de l'invention est illustrée dans la figure 1. Dans cette boîte 1, un câble principal 2 est joint à un câble de dérivation 4. Ladite jonction des câbles 2 et 4 s'effectue dans un bloc de jonction 39 à l'intérieur d'une cavité 5 de la boîte 1. Le câble 2entre et sort de cette cavité par les orifices de passage 6 et7, tandis que le câble 4 y accède par l'orifice 8. Les orifices 7 et 8 sont adjacents l'un à l'autre et opposés à l'orifice 6. La boîte 1 est divisée en deux demi-coquilles 9 et 10 par un joint 11 dans un plan sensiblement vertical traversant les trois orifices de passage 6, 7 et 8. La première demi-coquille 9 est plus longue que la deuxième demi-coquille 10, comportant des prolongations 12 et 13 au niveau des orifices de passage 6, 7 et 8.

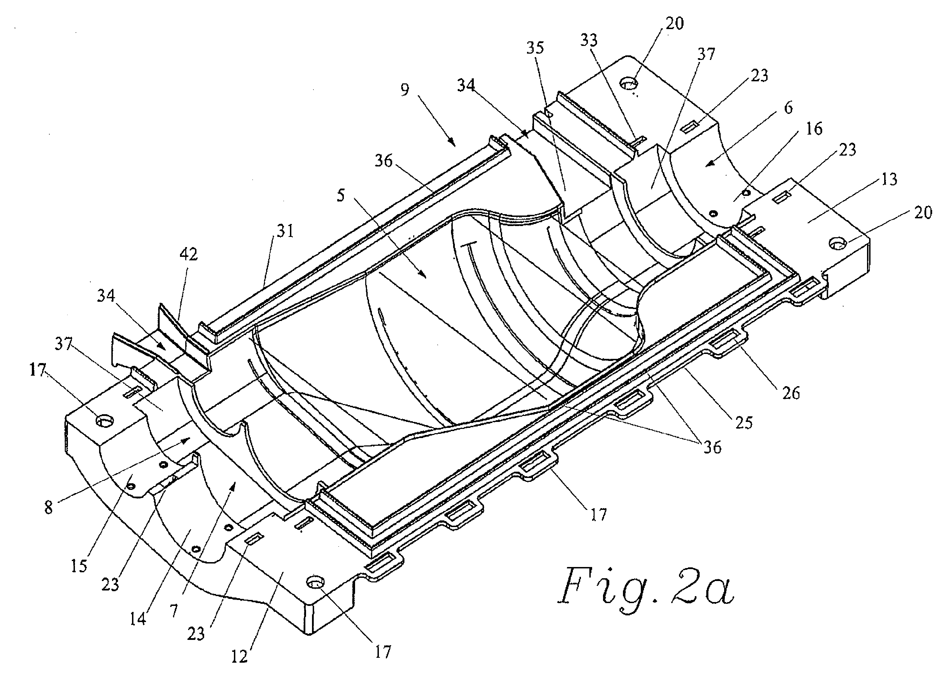

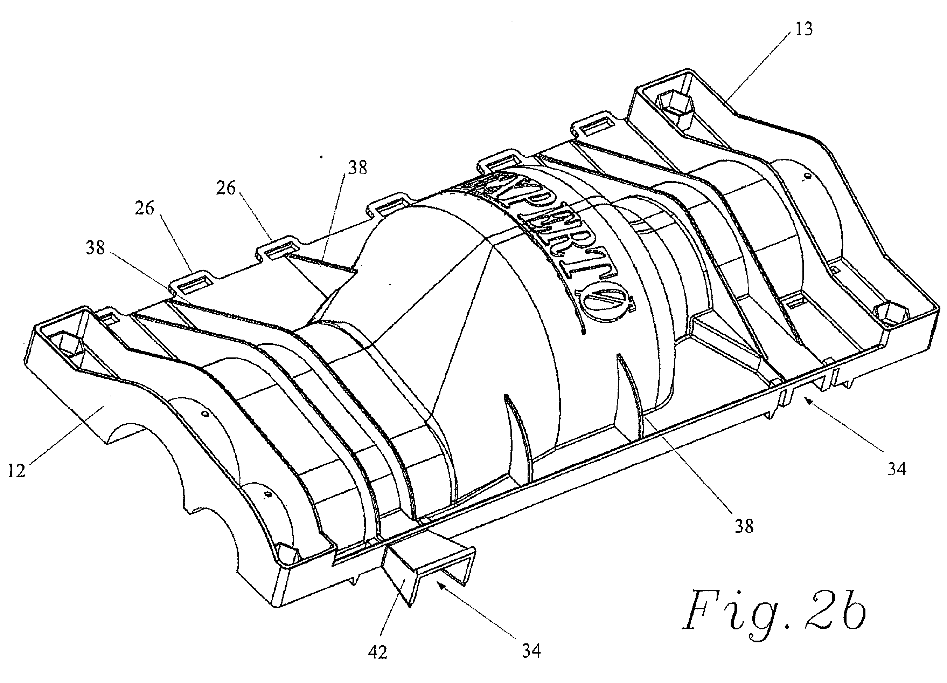

Cette première demi-coquille 9 est séparément illustrée sur les figures 2a et 2b. Ainsi, on peut voir que la première prolongation 12 comporte des logements concaves 14 et 15 pour recevoir le câble principal 2 et le câble de dérivation 4, respectivement, et que la deuxième prolongation 13 comporte un autre logement 16 pour recevoir le câble principal 2.

La première prolongation 12 comporte aussi des orifices 17 pour y affixer une bride 18 moyennant des vis de pression 19. De retour à la figure 1, on peut voir comment la bride 18 serre simultanément le câble principal 2 et le câble de dérivation 4 contre les logements concaves respectifs 14 et 15 dans la première prolongation 12.

La deuxième prolongation 13 comporte aussi des orifices 20 pour y affixer une bride 21 moyennant des vis de pression 22. Cette bride 21 serre le câble principal 2 contre le logement concave 16 dans la deuxième prolongation 13.

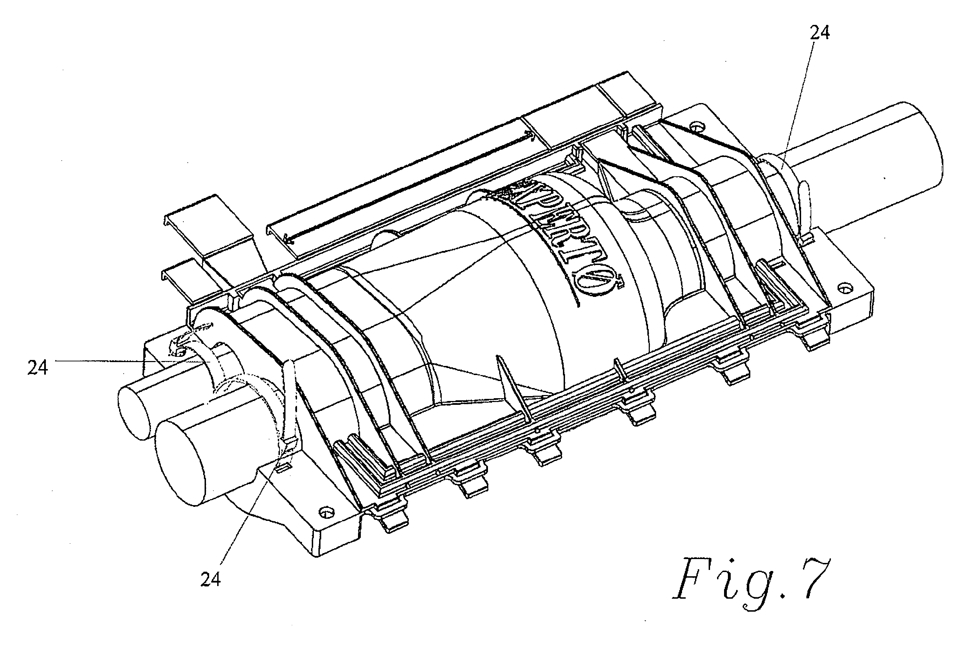

Tant la première comme la deuxième prolongation 12,13 comportent aussi des orifices allongés 23 pour le passage de colliers flexibles 24. Comme on peut voir dans la figure 7, des tels colliers flexibles 24 peuvent être utilisés alternativement aux brides 18 et/ou 21 pour serrer les câbles 2 et/ou 4 dans les logements 14,15 et/ou 16.

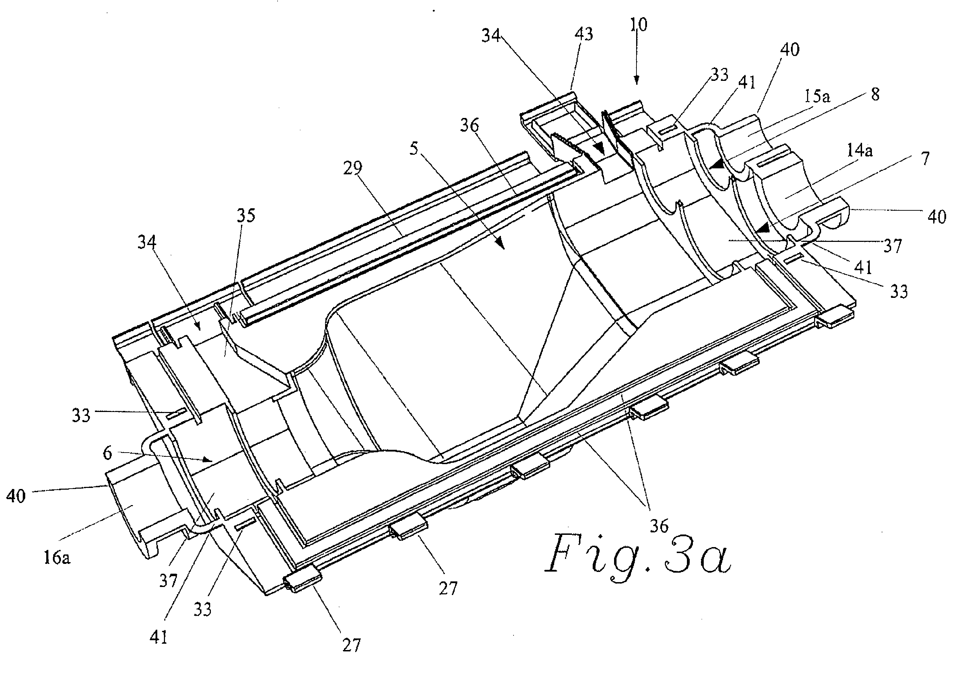

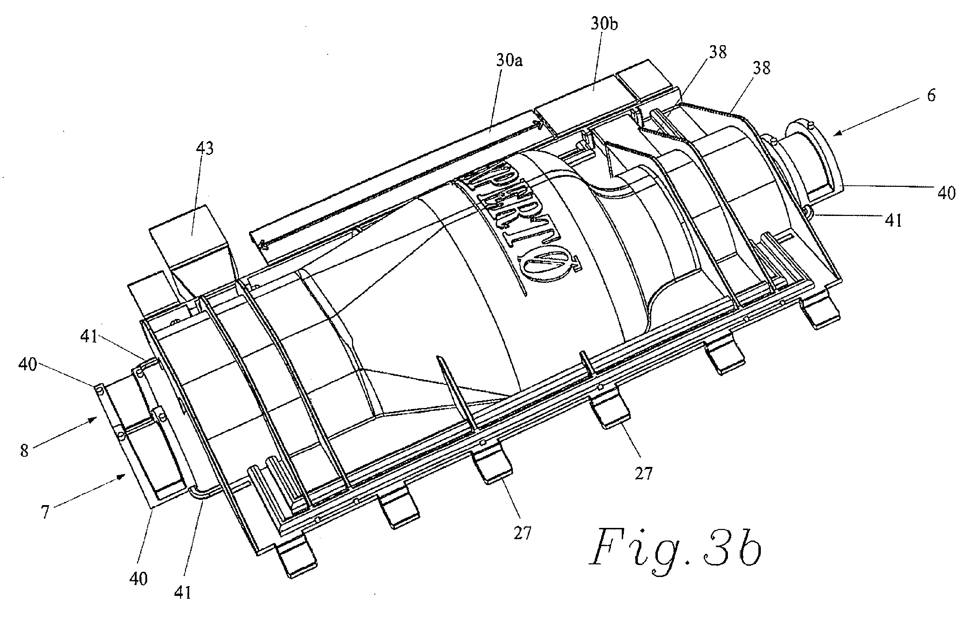

Comme on peut voir de nouveau dans les figures 2a et 2b, la première demi-coquille 9 comporte, sur un bord inférieur 25, des moyens d'accrochage femelles 26, destinés à recevoir des moyens d'accrochage mâles 27 complémentaires installés sur un bord inférieur 28 de la deuxième demi-coquille 10, tels que présentés dans la figure 3. Sur un bord supérieur 29 de la deuxième demi-coquille 10, un couvercle 30, solidaire avec le bord supérieur 29 de la deuxième demi-coquille 10 et clipsable sur un bord supérieur 31 de la première demi-coquille 9, pour fermer les demi-coquilles 9,10. Le couvercle 30 peut comporter, par exemple sur une section centrale 30a, un marquage correspondant à une côte maximale de dégainage du câble 2. Afin d'assurer encore plus la fermeture des demi-coquilles 9,10, elles comportent aussi des orifices allongés 33 pour le passage d'autres colliers flexibles de serrage (non illustrés) afin de resserrer les deux demi-coquilles 9,10 l'une contre l'autre.

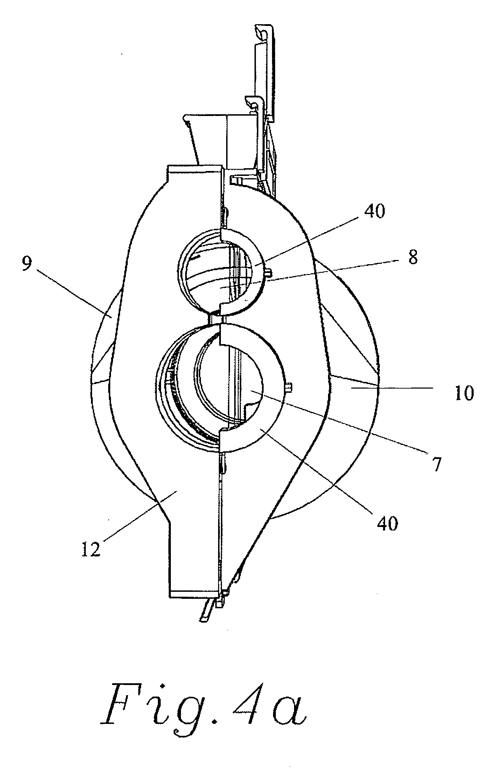

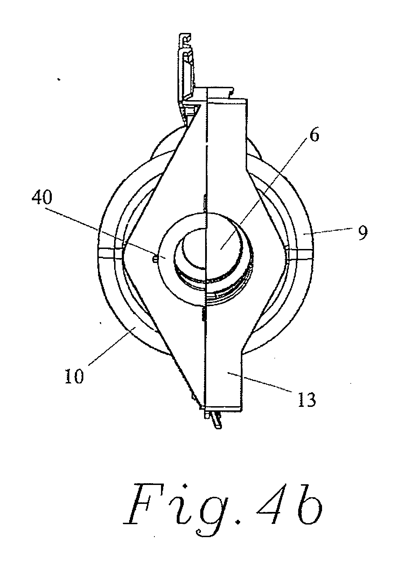

Comme on peut voir sur les figures 3a, 3b, la deuxième demi-coquille 10 comporte aussi des cales 40 en prolongation des orifices de passage 6, 7 et 8. Ces cales 40 comportent des logements concaves 14a, 15a, 16a. Quand la boîte 1 est refermée, ces logements concaves 14a, 15a, et 16a sont opposés, respectivement, aux logements concaves 14, 15 et 16 dans les première et deuxième prolongations 12 et 13 de la première demi-coquille 9. De cette manière, si les cales 40 sont maintenues en place quand la boîte est refermée, comme illustré dans les figures 4a et 4b, les cales vont s'interposer entre les brides 18, 21, et les câbles 2, 4, permettant ainsi la fixation de câbles de petit diamètre et leur centrage dans les orifices de passage 6, 7 et 8. La connexion entre les cales 40 et le corps de la deuxième demi-coquille 10 est flexible, permettant ainsi les brides 18, 21 de continuer a exercer une force de serrage sur les câbles 2, 4 à travers les cales 40. En outre, ces connexions peuvent être coupées pour ainsi détacher chaque cale 40 du corps de la deuxième demi-coquille 10, lorsque cette cale 40 n'est pas nécessaire. Dans la boîte illustrée sur la figure 7, par exemple, les trois cales 40 de la deuxième demi-coquille 10 ont été détachées.

La boîte 1 comporte aussi des orifices 34 pour remplir la cavité 5 avec une résine durcissable et isolante. Ces orifices 34 de remplissage sont aussi situés sur le joint 11, et plus particulièrement sur les bords supérieurs 29,31 des demi-coquilles 9,10. Au moins un des orifices 34 peut comporter un entonnoir 42 afin de faciliter le remplissage, et aussi pour permettre une certaine expansion de la résine durcissable. Cet entonnoir 42 peut être fermé par un couvercle 43 séparé. Les orifices 34 sont reliés à la cavité 5 par des canaux 35 creusés dans les demi-coquilles 9, 10. Le couvercle 30 peut comporter aussi une section latérale 30b permettant de refermer au moins un de ces orifices 34.

Pour éviter des fuites de la résine, des chicanes 36 sont disposées entre les deux demi-coquilles 9,10 autour de la cavité 5. Aussi pour assurer l'étanchéité de la boîte 1, des logements 37 sont prévus derrière les trois orifices de passage 6,7 et 8 afin de recevoir sous pression des bandes compressibles, par exemple de mousse, préalablement enroulées autour des câbles 2 et 4.

Finalement, pour assurer la rigidité de l'ensemble, les deux demi-coquilles 9, 10 sont pourvues de nervures de renforcement 38. Les demi-coquilles 9,10 du mode de réalisation illustré sont fabriquées en matière plastique.

Pour effectuer une jonction dérivation avec la boîte 1 de jonction dérivation illustrée, on procède dans un premier pas à dénuder la gaine extérieure du câble principal 2sur une longueur non supérieure à la côte maximale de dégainage indiquée par le marquage. On utilise donc ledit marquage pour mesurer lesdites côtes sur le câble 2 avant de le dégainer.

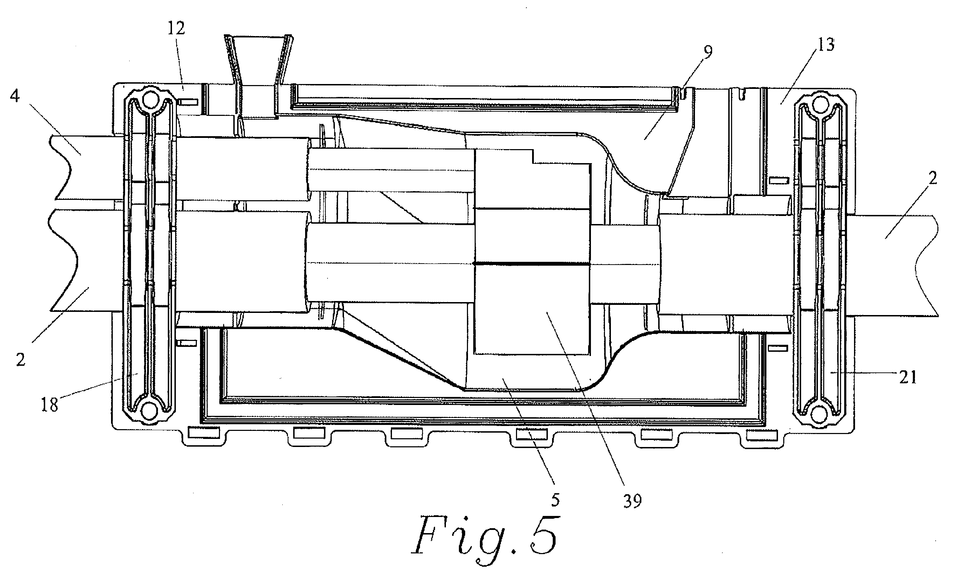

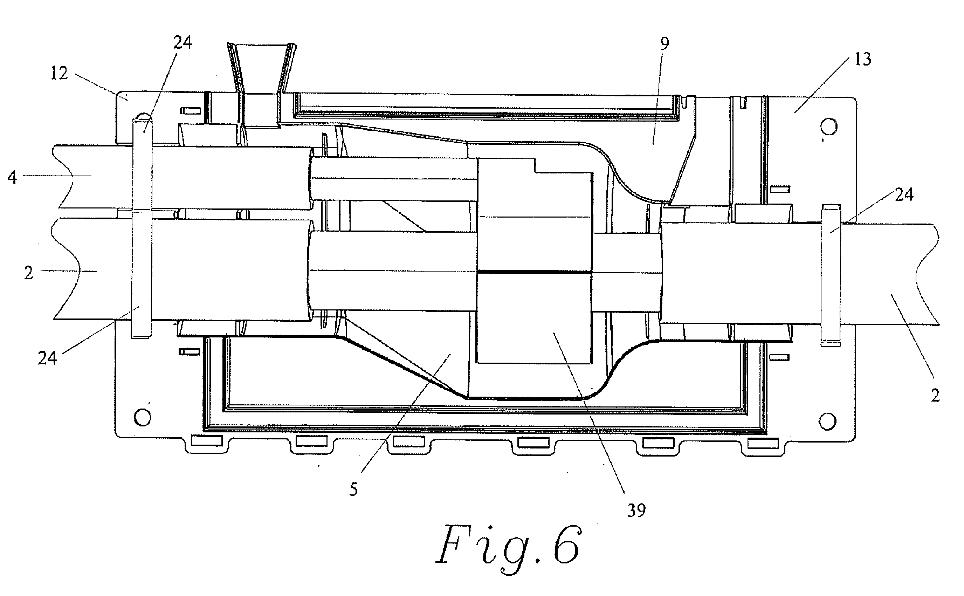

Ensuite on procède à joindre le câble principal 2 avec le câble de dérivation 4 avec un bloc de jonction 39. Une fois les deux câbles 2 et 4 sont connectés par le bloc de jonction 39, celui-ci est placé dans la première demi-coquille 9. Celle-ci est pourvue des moyens de centrage permettant de déterminer la position dans laquelle le bloc de jonction 39 doit être placé. Le câble principal 2 est placé dans les logements concaves 14 et 16, et le câble de dérivation 4 est placé dans son logement concave 15, de manière aussi à ce que des bandes compressibles enroulées autour des câbles entrent dans les logements 37. Après cela, on procède à fixer chaque câble dans son logement respectif avec des brides 18, 21, comme illustré dans la figure 5, et/ou avec des colliers flexibles 24, comme illustré dans la figure 6.

La deuxième demi-coquille 10 peut alors être refermée sur la première demi-coquille 9. Pour cela, on accroche d'abord les moyens d'accrochage mâles 27 de la deuxième demi-coquille 10 sur les moyens d'accrochage femelles 26 de la première demi-coquille 9, et on pivote ensuite les deux demi-coquilles 9, 10 l'une vers l'autre. Afin de bloquer les deux demi-coquilles 9, 10 en position fermée, on peut alors clipser au moins la section centrale 30a du couvercle 30 sur le bord supérieur 31 de la première demi-coquille 9. Afin de resserrer les deux demi-coquilles 9,10 l'une contre l'autre, et ainsi encore plus assurer leur fermeture, on peut aussi passer des colliers flexibles de serrage par les paires d'orifices allongés 33 et les serrer.

Pour encapsuler le bloc de jonction 39 et les câbles 2 et 4, une résine durcissable est alors versée à travers un des orifices de remplissage 34 et son canal 35 correspondant jusqu'à remplir sensiblement entièrement la cavité 5. Pour éviter des fuites de résine, la section latérale 30b du couvercle 30 et le couvercle 34 sont alors refermés sur les orifices de remplissage 34 et clipsés sur le bord supérieur 31 de la première demi-coquille 9. Le résultat est illustré sur la figure 1 ou, si des flexibles 24 ont été utilisés pour la fixation des câbles 2 et 4, sur la figure 7. La boîte 1 peut alors être directement enterrée sans devoir attendre à ce que la résine durcisse.

Quoique la présente invention ait été décrite en se référant à des exemples de réalisation spécifiques, il est évident que des différentes modifications et changements peuvent être effectués sur ces exemples sans sortir de la portée générale de l'invention telle que définie par les revendications. Par conséquent, la description et les dessins doivent être considérés dans un sens illustratif plutôt que restrictif.

### REFERENCES DES FIGURES

- 1: Boîte de jonction dérivation
- 2: Câble principal
- 4: Câble de dérivation
- 5: Cavité
- 6: Orifice de passage
- 7: Orifice de passage
- 8: Orifice de passage
- 9: Première demi-coquille
- 10: Deuxième demi-coquille
- 11: Joint
- 12: Première prolongation
- 13: Deuxième prolongation
- 14: Logement
- 15: Logement
- 16: Logement
- 17: Orifices
- 18: Bride
- 19: Vis de pression
- 20: Orifices
- 21: Bride
- 22: Vis de pression
- 23: Orifices allongés
- 24: Colliers flexibles
- 25: Bord inférieur
- 26: Moyens d'accrochage femelles
- 27: Moyens d'accrochage mâles
- 28: Bord inférieur
- 29: Bord supérieur
- 30: Couvercle

- 30a: Section centrale
- 30b: Section latérale
- 31: Bord supérieur
- 33: Orifices allongés
- 34: Orifice de remplissage
- 35: Canaux de remplissage
- 36: Chicane
- 37: Logements
- 38: Nervures de renforcement
- 39: Bloc de jonction
- 40: Cales
- 41: Connexions
- 42: Entonnoir
- 43: Couvercle

## Revendications

1. Boîte (1) de jonction présentant au moins deux orifices adjacents (7,8) pour le passage de câbles (2,4) à joindre, apte à être sensiblement remplie d'un matériau isolant, tel que, par exemple une résine durcissable ou un gel, et comportant une première et une deuxième demi-coquille (9,10) divisées par un joint (11) traversant lesdits orifices adjacents (7,8), **caractérisée en ce que** la première demi-coquille (9) comporte une première prolongation (12) extérieure au niveau desdits au moins deux orifices adjacents (7,8), ladite première prolongation (12) comportant des moyens de fixation réversible d'une bride (18) pour serrer simultanément au moins deux câbles (2,4) adjacents contre des logements concaves (14,15) dans ladite première prolongation (12).

2. Boîte (1) de jonction suivant la revendication 1, dans laquelle la deuxième demi-coquille (10) comporte une cale (40) détachable en prolongation d'au moins un desdits orifices adjacents (7,8), ladite cale (40) détachable comportant un logement concave (14a,15a) sensiblement opposé à un desdits logements concaves (14,15) de ladite première prolongation (12).

3. Boîte (1) de jonction suivant la revendication 1, comportant au moins un autre orifice (6) pour le passage d'un câble (2) à joindre, sensiblement opposé auxdits orifices adjacents (7,8) et traversé aussi par ledit joint (11), la première demi-coquille (9) comportant une deuxième prolongation (13) extérieure au niveau de cet autre orifice (6) et comportant des moyens de fixation d'une bride (21) pour serrer cet autre câble (2) contre un logement concave (16) dans ladite deuxième prolongation (13).

4. Boîte (1) de jonction suivant la revendication 3, dans laquelle la deuxième demi-coquille (10) comporte, une cale (40) détachable en prolongation de l'autre orifice (6), ladite cale (40) détachable présentant un logement concave (16a) opposé au logement concave (16) de ladite deuxième prolongation (13).

5. Boîte (1) de jonction suivant la revendication 2, dans laquelle ladite deuxième prolongation (13) comporte en outre des orifices (23) pour le passage d'un collier flexible (24) pour la fixation d'un câble (2).

6. Boîte (1) de jonction suivant une quelconque des revendications précédentes, dans laquelle ladite première prolongation (12) comporte des orifices (23) pour le passage de colliers flexibles (24) pour la fixation de câbles (2,4).

7. Boîte (1) de jonction suivant une quelconque des revendications précédentes, comportant, en outre, au moins un orifice de remplissage (34) pour le remplissage de la boîte (1) avec ledit matériau isolant, l'au moins un orifice de remplissage (34) étant de préférence traversé par ledit joint (11).

8. Boîte (1) de jonction suivant une quelconque des revendications précédentes, comportant en outre une charnière entre la première et la deuxième demi-coquille (9,10), formée de préférence par des moyens d'accrochage (26,27) complémentaires dans chaque demi-coquille (9,10) ; et des moyens de fermeture sensiblement opposés à ladite charnière, comportant de préférence un couvercle (30) clipsable, par exemple solidaire à une des demi-coquilles (9,10).

9. Boîte (1) de jonction suivant une quelconque des revendications précédentes, dans laquelle au moins la première demi-coquille (9) comporte des moyens de centrage d'un bloc de jonction de câbles à l'intérieur de la boîte (1).

10. Boîte (1) de jonction suivant une quelconque des revendications précédentes, dans laquelle au moins une des demi-coquilles (9,10), de préférence les deux, sont formées en matière plastique, de préférence biodégradable.

11. Procédé d'installation d'une jonction d'au moins deux câbles (2,4) dans une boîte (1) de jonction présentant au moins deux orifices (7,8) adjacents pour le passage des câbles (2,4), et comportant une première et une deuxième demi-coquille (9,10) divisées par un joint (11) traversant lesdits orifices (7,8) adjacents, ledit procédé comportant les étapes suivantes :
- dégainage des câbles (2,4) ;
- jonction des câbles (2,4) dans un bloc de jonction ;
- fermeture des demi-coquilles (9,10) autour des câbles (2,4) et du bloc de jonction ; et
- remplissage de la boîte (1) avec un matériau isolant, tel que, par exemple, une résine durcissable ou un gel, afin d'encapsuler les câbles (2,4) et le bloc de jonction dans la boîte (1) ;
ledit procédé étant **caractérisé en ce que**
- la première demi-coquille (9) comporte une première prolongation (12) extérieure au niveau desdits au moins deux orifices (7,8) adjacents ;
- ledit procédé comporte en outre une étape de fixation réversible des câbles (2,4) dans des logements concaves (14,15) sur au moins ladite première prolongation (12) extérieure avant la fermeture des demi-coquilles (9,10).

12. Procédé suivant la revendication 11, dans lequel la boîte comporte au moins un autre orifice (6) pour le passage d'un câble (2) à joindre, sensiblement opposé auxdits orifices (7,8) adjacents et traversé aussi par ledit joint (11), la première demi-coquille (9) comportant une deuxième prolongation (13) extérieure au niveau de cet autre orifice (6), et dans lequel ladite étape de fixation comporte aussi la fixation d'au moins ledit câble (2) dans un logement concave (16) sur ladite deuxième prolongation (13) extérieure.

13. procédé suivant une quelconque des revendications 11 ou 12, dans lequel au moins deux câbles (2,4) sont fixés avec une seule bride dans des logements concaves (14,15) sur ladite première prolongation (12) extérieure.

14. Procédé suivant une quelconque des revendications 11 à 13, dans lequel un collier flexible (24) est utilisé pour la fixation d'au moins un câble (2,4) dans un logement concave (14,15,16).

15. Procédé suivant une quelconque des revendications 11 à 14, dans lequel ledit matériau isolant est introduit dans la boîte (1) à travers au moins un orifice de remplissage (34) placé entre les deux demi-coquilles (9,10).

## Patentansprüche

1. Anschlussbox (1), umfassend mindestens zwei aneinandergrenzende Öffnungen (7, 8) für den Durchgang von zu verbindenden Kabeln (2, 4) und geeignet, im Wesentlichen mit einem Isoliermaterial, wie beispielsweise einem aushärtenden Harz oder einem Gel, gefüllt zu werden, und umfassend eine erste und eine zweite Habschale (9, 10), die durch eine Dichtung (11) geteilt sind, die durch die aneinandergrenzenden Öffnungen (7, 8) hindurchgeht, **dadurch gekennzeichnet, dass** die erste Halbschale (9) eine erste äußere Verlängerung (12) im Bereich der mindestens zwei aneinandergrenzenden Öffnungen (7, 8) umfasst, wobei die erste Verlängerung (12) Mittel zur reversiblen Befestigung eines Flansches (18) umfasst, um gleichzeitig mindestens zwei aneinandergrenzende Kabel (2, 4) gegen konkave Lagerungen (14, 15) in der ersten Verlängerung (12) zu drücken.

2. Anschlussbox (1) nach Anspruch 1, bei der die zweite Halbschale (10) einen lösbaren Keil (40) in der Verlängerung mindestens einer der aneinandergrenzenden Öffnungen (7, 8) umfasst, wobei der lösbare Keil (40) eine konkave Lagerung (14a, 15a) im Wesentlichen gegenüber einer der konkaven Lagerungen (14, 15) der ersten Verlängerung (12) umfasst.

3. Anschlussbox (1) nach Anspruch 1, umfassend mindestens eine weitere Öffnung (6) für den Durchgang eines anzuschließenden Kabels (2) im Wesentlichen gegenüber den aneinandergrenzenden Öffnungen (7, 8), durch die ebenfalls die Dichtung (11) hindurchgeht, wobei die erste Halbschale (9) eine zweite äußere Verlängerung (13) im Bereich dieser weiteren Öffnung (6) aufweist und Mittel zur Befestigung eines Flansches (21) umfasst, um dieses weitere Kabel (2) an einer konkaven Lagerung (16) in der zweiten Verlängerung (13) zu befestigen.

4. Anschlussbox (1) nach Anspruch 3, bei der die zweite Halbschale (10) einen lösbaren Keil (40) in der Verlängerung der weiteren Öffnung (6) umfasst, wobei der lösbare Keil (40) eine konkave Lagerung (16a) gegenüber der konkaven Lagerung (16) der zweiten Verlängerung (13) aufweist.

5. Anschlussbox (1) nach Anspruch 2, bei der die zweite Verlängerung (13) ferner Öffnungen (23) für den Durchgang einer biegsamen Schelle (24) zur Befestigung eines Kabels (2) umfasst.

6. Anschlussbox (1) nach einem der vorhergehenden Ansprüche, bei der die erste Verlängerung (12) Öffnungen (23) für den Durchgang von biegsamen Schellen (24) zur Befestigung von Kabeln (2, 4) umfasst.

7. Anschlussbox (1) nach einem der vorhergehenden Ansprüche, ferner umfassend mindestens eine Befüllungsöffnung (34) zum Befüllen der Box (1) mit dem Isoliermaterial, wobei die mindestens eine Befüllungsöffnung (34) vorzugsweise von der Dichtung (11) durchquert wird.

8. Anschlussbox (1) nach einem der vorhergehenden Ansprüche, ferner umfassend ein Scharnier zwischen der ersten und der zweiten Halbschale (9, 10), das vorzugsweise durch komplementäre Befestigungsmittel (26, 27) in jeder Halbschale (9, 10) gebildet ist; und Verschlussmittel im Wesentlichen gegenüber diesem Scharnier, vorzugsweise umfassend einen anklippbaren Deckel (30), der beispielsweise mit einer der Halbschalen (9, 10) verbunden ist.

9. Anschlussbox (1) nach einem der vorhergehenden Ansprüche, bei der mindestens die erste Halbschale (9) Mittel zum Zentrieren eines Kabelanschlussblocks im Inneren der Box (1) umfasst.

10. Anschlussbox (1) nach einem der vorhergehenden Ansprüche, bei der mindestens eine der Halbschalen (9, 10), vorzugsweise beide, aus vorzugsweise biologisch abbaubarem Kunststoff hergestellt sind.

11. Verfahren zur Herstellung einer Verbindung von mindestens zwei Kabeln (2, 4) in einer Anschlussbox (1), die mindestens zwei aneinandergrenzende Öffnungen (7, 8) für den Durchgang der Kabel (2, 4) aufweist und eine erste und eine zweite Halbschale (9, 10) umfasst, die durch eine durch die aneinandergrenzenden Öffnungen (7, 8) hindurchgehende Dichtung (11) getrennt sind, wobei das Verfahren die folgenden Schritte umfasst:
- Entmanteln der Kabel (2, 4);
- Verbinden der Kabel (2, 4) in einem Anschlussblock;
- Schließen der Halbschalen (9, 10) um die Kabel (2, 4) und den Anschlussblock; und
- Befüllen der Box (1) mit Isoliermaterial, wie beispielsweise einem aushärtbaren Harz oder einem Gel, um die Kabel (2, 4) und den Anschlussblock in der Box (1) einzukapseln;
wobei das Verfahren **dadurch gekennzeichnet ist, dass**
- die erste Halbschale (9) eine erste äußere Verlängerung (12) im Bereich der mindestens zwei aneinandergrenzenden Öffnungen (7, 8) umfasst;
- das Verfahren ferner einen Schritt der reversiblen Befestigung der Kabel (2, 4) in konkaven Lagerungen (14, 15) auf mindestens der ersten äußeren Verlängerung (12) vor dem Schließen der Halbschalen (9, 10) umfasst.

12. Verfahren nach Anspruch 11, bei dem die Box mindestens eine weitere Öffnung (6) für den Durchgang eines anzuschließenden Kabels (2) im Wesentlichen gegenüber den aneinandergrenzenden Öffnungen (7, 8), durch die ebenfalls die Dichtung (11) hindurchgeht, umfasst, wobei die erste Halbschale (9) eine zweite äußere Verlängerung (13) im Bereich dieser weiteren Öffnung (6) aufweist, und bei dem der Befestigungsschritt auch die Befestigung des mindestens einen Kabels (2) in einer konkaven Lagerung (16) in der zweiten äußeren Verlängerung (13) umfasst.

13. Verfahren nach einem der Ansprüche 11 oder 12, bei dem mindestens zwei Kabel (2, 4) mit einem einzigen Flansch in konkaven Lagerungen (14, 15) auf der ersten äußeren Verlängerung (12) befestigt sind.

14. Verfahren nach einem der Ansprüche 11 bis 13, bei dem die biegsame Schelle (24) für die Befestigung mindestens eines Kabels (2, 4) in einer konkaven Lagerung (14, 15, 16) verwendet wird.

15. Verfahren nach einem der Ansprüche 11 bis 14, bei dem das Isoliermaterial in die Box (1) durch mindestens eine Befüllungsöffnung (34), die zwischen den beiden Halbschalen (9, 10) angeordnet ist, eingeführt wird.

## Claims

1. A junction box (1) having at least two adjacent orifices (7, 8) for the passage of cables (2, 4) to be joined, which can be substantially filled with an insulating material, for example such as a hardenable resin or a gel, and including a first and second half-shell (9, 10) that are divided by a seal (11) passing through said adjacent orifices (7, 8), **characterized in that** the first half-shell (9) includes a first outer extension (12) at said at least two adjacent orifices (7, 8), said first extension (12) including reversible fastening means for a flange (18) to clamp at least two adjacent cables (2, 4) simultaneously against concave housings (14, 15) in said first extension (12).

2. The junction box (1) according to claim 1, wherein the second half-shell (10) includes a detachable shim (40) extending at least one of said adjacent orifices (7, 8), said detachable shim (40) including a concave housing (14a, 15a) substantially opposite one of said concave housings (14, 15) of said first extension (12).

3. The junction box (1) according to claim 1, including at least one other orifice (6) for the passage of a cable (2) to be joined, substantially opposite said adjacent orifices (7, 8) and also passed through by said seal (11), the first half-shell (9) including a second outer extension (13) at that other orifice (6) and including means for fastening a flange (21) to clamp said other cable (2) against a concave housing (16) in said second extension (13).

4. The junction box (1) according to claim 3, wherein the second half-shell (10) includes a detachable shim (40) extending the other orifice (6), said detachable shim (40) having a concave housing (16a) opposite the concave housing (16) of said second extension (13).

5. The junction box (1) according to claim 2, wherein said second extension (13) further includes orifices (23) for the passage of a flexible collar (24) to fasten a cable (2).

6. The junction box (1) according to any one of the preceding claims, wherein said first extension (12) includes orifices (23) for the passage of flexible collars (24) for fastening cables (2, 4).

7. The junction box (1) according to any one of the preceding claims, further including at least one filling orifice (34) for filling the box (1) with said insulating material, at least one filling orifice (34) preferably being passed through by said seal (11).

8. The junction box (1) according to any one of the preceding claims, further including a hinge between the first and second half-shell (9, 10), preferably formed by complementary catching means (26, 27) in each half-shell (9, 10); and closing means substantially opposite said hinge, preferably including a clipping cover (30), for example secured to one of the half-shells (9, 10).

9. The junction box (1) according to one of the preceding claims, wherein at least the first half-shell (9) includes means for centering a cable junction block inside the box (1).

10. The junction box (1) according to any one of the preceding claims, wherein at least one of the half-shells (9, 10), preferably both, are made from a plastic material, which is preferably biodegradable.

11. A method for installing a junction of at least two cables (2, 4) in a junction box (1) having at least two adjacent orifices (7, 8) for the passage of the cables (2, 4), and including a first and a second half-shell (9, 10) that are divided by a seal (11) passing through said adjacent orifices (7, 8), said method including the following steps:
- ripping the cables (2, 4);
- joining the cables (2, 4) in a junction block;
- closing the half-shells (9, 10) around the cables (2, 4) and the junction block; and
- filling the box (1) with an insulating material, such as a hardenable resin or a gel, for example, so as to encapsulate the cables (2, 4) and the junction block in the box (1);
said method being **characterized in that**
- the first half-shell (9) includes a first outer extension (12) at said at least two adjacent orifices (7, 8);
- said method further includes a step for reversibly fastening the cables (2, 4) in concave housings (14, 15) over at least said first outer extension (12) before closing the half-shells (9, 10).

12. The method according to claim 11, wherein the box includes at least one other orifice (6) for the passage of a cable (2) to be joined, substantially opposite said adjacent orifices (7, 8) and also passed through by said seal (11), the first half-shell (9) including a second outer extension (13) at that other orifice (6), and wherein said fastening step also includes fastening at least said cable (2) in a concave housing (16) on said second outer extension (13).

13. The method according to any one of claims 11 or 12, wherein at least two cables (2, 4) are fastened with a single flange in concave housings (14, 15) on said first outer extension (12).

14. The method according to any one of claims 11 to 13, wherein a flexible collar (24) is used to fasten at least one cable (2, 4) in a concave housing (14, 15, 16).

15. The method according to any one of claims 11 to 14, wherein said insulating material is introduced into the box (1) through at least one filling orifice (34) placed between the two half-shells (9, 10).
